# EUROPEAN PATENT SPECIFICATION

(11) **EP 2 543 203 B1**
(45) Date of publication and mention of the grant of the patent: **18.04.2018**
(21) Application number: 11709552.1
(22) Date of filing: 04.03.2011
(51) Int. Cl.: H04W 8/04

(54) **METHOD AND APPARATUS TO CONTROL LOCAL INTERNET PROTOCOL ACCESS FOR DEVICES**
VERFAHREN UND VORRICHTUNG ZUR STEUERUNG VON LOKALEM IP-ZUGANG FÜR VORRICHTUNGEN
PROCÉDÉ ET APPAREIL POUR LE CONTRÔLE D'UN ACCÈS VIA UN PROTOCOLE INTERNET LOCAL POUR DES DISPOSITIFS

(30) Priority: 28.02.2011 US 201113036574; 07.01.2011 US 430676 P; 05.03.2010 US 311215 P
(43) Date of publication of application: 09.01.2013
(73) Proprietor: Qualcomm Incorporated, San Diego, CA 92121 (US)
(72) Inventor: HORN, Gavin, Bernard, San Diego, California 92121 (US)
(74) Representative: Dunlop, Hugh Christopher
(86) International application number: PCT/US2011/027293
(87) International publication number: WO 2011/109776

(56) References cited:
- US-A1- 2008 285 492
- "3rd Generation Partnership Project; Technical Specification Group Services and System Aspects; 3GPP system to Wireless Local Area Network (WLAN) interworking; System description (Release 8)", 3GPP STANDARD; 3GPP TS 23.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2008 (2008-12-01), pages 1-85, XP050363357,
- QUALCOMM EUROPE: "Key aspects: P-GW/GGSN location principles for LIPA and SIPTO traffic", 3GPP DRAFT; S2-095088, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Kyoto; 20090904, 28 August 2009 (2009-08-28), XP050396618, [retrieved on 2009-08-25]
- "3 rd Generation Partnership Project; Technical Specification Group Services and System Aspects; Service requirements for Home NodeBs and Home eNodeBs (Release 10)", 3GPP STANDARD; 3GPP TS 22.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 18 December 2009 (2009-12-18) , pages 1-23, XP050401071, [retrieved on 2009-12-18]
- 3GPP: "3GPP TS 23.401 V10.1.0, 3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP TS 23.401 V10.1.0,, vol. V10.1.0, 1 September 2010 (2010-09-01), pages 1-271, XP007920142, [retrieved on 2012-01-25]
- ALCATEL-LUCENT ET AL: "Restructuration of TR 23.829", 3GPP DRAFT; S2-101719 WAS 1449_23829 RESTRUCTURING_R0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 25 February 2010 (2010-02-25), XP050434102, [retrieved on 2010-02-25]

## Description

### BACKGROUND

### Field

The following description relates generally to wireless network communications, and more particularly to communicating with nodes to receive local internet protocol access.

### Background

Wireless communication systems are widely deployed to provide various types of communication content such as, for example, voice, data, and so on. Typical wireless communication systems may be multiple-access systems capable of supporting communication with multiple users by sharing available system resources (e.g., bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), evolution data optimized (EV-DO), *etc.*

Generally, wireless multiple-access communication systems may simultaneously support communication for multiple mobile devices. Each mobile device may communicate with one or more base stations via transmissions on forward and reverse links. The forward link (or downlink) refers to the communication link from base stations to mobile devices, and the reverse link (or uplink) refers to the communication link from mobile devices to base stations. Further, communications between mobile devices and base stations may be established via single-input single-output (SISO) systems, multiple-input single-output (MISO) systems, multiple-input multiple-output (MIMO) systems, and so forth. In addition, mobile devices can communicate with other mobile devices (and/or base stations with other base stations) in peer-to-peer wireless network configurations.

To supplement conventional base stations, additional base stations can be deployed to provide more robust wireless coverage to mobile devices. For example, wireless relay stations and low power base stations (*e.g.,* which can be commonly referred to as access point base stations, Home NodeBs or Home eNBs, collectively referred to as H(e)NB, femto access points, femtocells, picocells, microcells, *etc.*) can be deployed for incremental capacity growth, richer user experience, in-building or other specific geographic coverage, and/or the like. In some configurations, such low power base stations are connected to the Internet and the mobile operator's network *via* broadband connection (*e.g.,* digital subscriber line (DSL) router, cable or other modem, *etc*.). Some H(e)NBs provide closed subscriber group (CSG) access that restricts access to certain devices or related users that are members of the CSG. A home subscriber server (HSS), home location register (HLR), or one or more other nodes of a device's home network can store CSG membership information.

H(e)NBs can be deployed by various network operators, and thus devices can attempt access to, and indeed be provisioned at, one or more H(e)NBs at a visited network. In this regard, one or more nodes of a visited network can request CSG membership information from the HSS, HLR, *etc.* at a device's home network to determine whether the device is able to access a CSG on the visited network, to provision the device at the CSG on the visited network, *etc.* By virtue of the broadband connection utilized by H(e)NBs, H(e)NBs can additionally acquire access to a local or similar network using internet protocol (IP). In an example, where an H(e)NB utilizes (or provides) a router that can allow other devices to access the Internet, the devices and the H(e)NB can participate in a local IP network that is served by the broadband Internet connection, and can thus provide services or access to resources, such as storage devices, printers or other output devices, *etc.* In addition, the H(e)NB, in some examples, can provide local IP access (LIPA) to one or more mobile devices communicating with the H(e)NB such that the one or more mobile devices can access local resources on the IP network.

Standard Document 3GPP TS 23.234 v8.0.0 provides a system description for interworking between 3GPP systems and Wireless Local Area Networks (WLAN). In particular, TS 23.234 describes such interworking in a roaming scenario. "Key Aspects: P-GW/GGSN location principles for LIPA and SIPTO traffic" by Qualcomm Europe discusses different architectural choices for the location of the P-GW/GGSN for LIPA. US 2008/0285492 describes a system configured to monitor availability of a local Internet protocol local breakout service and to obtain an access point name when available. Standard Document 3GPP TS 22.220 v10.1.0 describes that Local IP Access (LIPA) provides access for IP capable UEs connected via a H(e)NB (i.e. using H(e)NB radio access) to other capable entities in the same residential/enterprise IP network. Traffic for Local IP Access is expected to not traverse the mobile operator's network except HeNB. TS 22.220 further provides that UEs shall be able to use LIPA in a visited network. 3GPP Draft Document TD S2-101719 "Restructuration of TR 23.829" introduces breakout in residential/enterprise IP networks and breakout at or above RAN.

### SUMMARY

The invention concerns methods, apparatus and computer program products as defined in the appended independent claims 1, 5, 9, 10, 18, 19. Embodiments representing further specific realisations of the invention are defined in the dependent claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more embodiments and corresponding disclosure thereof, various aspects are described in connection with controlling device access with respect to restricted group nodes in a visited network at the home network, at the device, and/or the like. For example, a home network of a device can specify an indicator related to allowing the device to utilize local internet protocol (IP) access LIPA offered by restricted groups of access points in the visited network. For example, a network node in the visited network can utilize the indicator to determine whether to allow the device to utilize LIPA.

According to an example, a method for provisioning LIPA information for a device communicating in a visited network is provided including receiving an indication from a visited network related to registering a device on the visited network. The method also includes sending one or more parameters in response to the indication along with a LIPA indicator that specifies whether the device is allowed to utilize LIPA at the visited network.

In another aspect, an apparatus for provisioning LIPA information for a device communicating in a visited network is provided that includes at least one processor configured to receive an indication from a visited network related to registering a device on the visited network. The at least one processor is further configured to send one or more parameters in response to the indication along with a LIPA indicator that specifies whether the device is allowed to utilize LIPA at the visited network. In addition, the apparatus includes a memory coupled to the at least one processor.

In yet another aspect, an apparatus provisioning LIPA information for a device communicating in a visited network is provided that includes means for receiving an indication from a visited network related to registering a device on the visited network. The apparatus further includes means for sending one or more parameters in response to the indication along with a LIPA indicator that specifies whether the device is allowed to utilize LIPA at the visited network.

Still, in another aspect, a computer-program product for provisioning LIPA information for a device communicating in a visited network is provided including a computer-readable medium having code for causing at least one computer to receive an indication from a visited network related to registering a device on the visited network. The computer-readable medium further includes code for causing the at least one computer to send one or more parameters in response to the indication along with a LIPA indicator that specifies whether the device is allowed to utilize LIPA at the visited network.

Moreover, in an aspect, an apparatus for provisioning LIPA information for a device communicating in a visited network is provided that includes a visited network registering component for receiving an indication from a visited network related to registering a device on the visited network. The apparatus further includes a LIPA indicating component for sending one or more parameters in response to the indication along with a LIPA indicator that specifies whether the device is allowed to utilize LIPA at the visited network.

According to another example, a method for obtaining LIPA information for a device communicating in a visited network is provided that includes receiving subscription information for a device along with a LIPA indicator that specifies whether the device is allowed to utilize LIPA in a visited network and determining whether to provide LIPA services to the device based at least in part on the LIPA indicator.

In another aspect, an apparatus for obtaining LIPA information for a device communicating in a visited network is provided that includes at least one processor configured to receive subscription information for a device along with a LIPA indicator that specifies whether the device is allowed to utilize LIPA in a visited network. The at least one processor is further configured to determine whether to provide LIPA services to the device based at least in part on the LIPA indicator. In addition, the apparatus includes a memory coupled to the at least one processor.

In yet another aspect, an apparatus for obtaining LIPA information for a device communicating in a visited network is provided that includes means for receiving subscription information for a device along with a LIPA indicator that specifies whether the device is allowed to utilize LIPA in a visited network. The apparatus further includes means for determining whether to provide LIPA services to the device based at least in part on the LIPA indicator.

Still, in another aspect, a computer-program product for obtaining LIPA information for a device communicating in a visited network is provided including a computer-readable medium having code for causing at least one computer to receive subscription information for a device along with a LIPA indicator that specifies whether the device is allowed to utilize LIPA in a visited network. The computer-readable medium further includes code for causing the at least one computer to determine whether to provide LIPA services to the device based at least in part on the LIPA indicator.

Moreover, in an aspect, an apparatus for obtaining LIPA information for a device communicating in a visited network is provided that includes a device registering component for receiving subscription information for a device along with a LIPA indicator that specifies whether the device is allowed to utilize LIPA in a visited network. The apparatus further includes a LIPA determining component for determining whether to provide LIPA services to the device based at least in part on the LIPA indicator.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a schematic block diagram of an aspect of a system for controlling local internet protocol access (LIPA) in a visited network.
Fig. 2 illustrates an example system for controlling device utilization of LIPA in a visited network from a node of a home network.
Fig. 3 illustrates an example wireless communication network in accordance with aspects described herein.
Fig. 4 is a message flow diagram of an aspect of performing a tracking area update procedure.
Fig. 5 is a flow chart of an aspect of a methodology for specifying whether a device can use LIPA in a visited network.
Fig. 6 is a flow chart of an aspect of a methodology that determines whether to provide LIPA services to a device.
Fig. 7 illustrates an example computing device according to various aspects described herein.
Fig. 8 illustrates an example system for specifying whether a device can use LIPA in a visited network.
Fig. 9 illustrates an example system for determining whether to provide LIPA services to a device.
Fig. 10 illustrates an example wireless communication system in accordance with various aspects set forth herein.
Fig. 11 illustrates an example wireless network environment that can be employed in conjunction with the various systems and methods described herein.
Fig. 12 illustrates a wireless communication system, configured to support a number of devices, in which the aspects herein can be implemented.
Fig. 13 illustrates an exemplary communication system to enable deployment of femtocells within a network environment.
Fig. 14 illustrates an example of a coverage map having several defined tracking areas.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

As described further herein, one or more indicators can be communicated and processed to determine behavior related to device access with respect to restricted group nodes on a visited network. For example, a node of a home network for a device can communicate an indicator to a node of a visited network that specifies whether the device is allowed to utilize local internet protocol (IP) access (LIPA) at the visited network. The node of the visited network can utilize this indicator to determine whether to allow the device to communicate with LIPA nodes using a related restricted group node. In this regard, the home network can exhibit control over a device's ability to utilize LIPA in a visited network.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, evolved Node B (eNB), or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, *etc.* UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, *etc.* UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches may also be used.

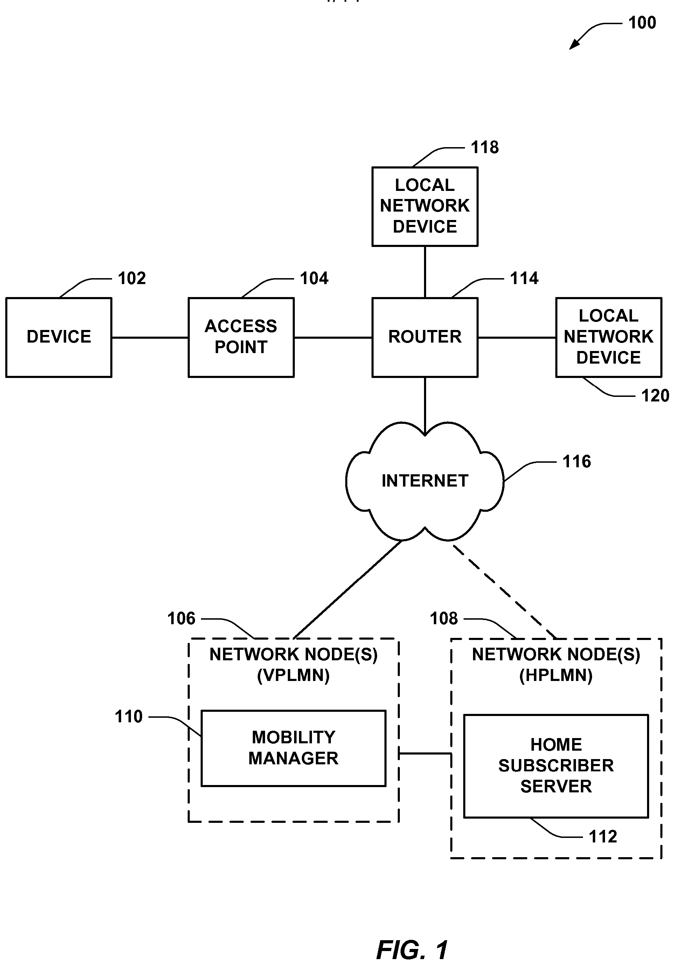

Referring to **Fig. 1****,** illustrated are several nodes of a sample communication system 100. For illustration purposes, various aspects of the disclosure are described in the context of one or more devices, access points, and network nodes that communicate with one another. It is to be appreciated, however, that aspects herein may be applicable to other types of apparatuses or other similar apparatuses that are referenced using other terminology. For example, access points can be referred to or implemented as base stations, eNodeBs (eNB), Home Node Bs (*e.g.,* in UMTS) or Home eNBs (*e.g.,* in LTE), collectively referred to as H(e)NBs, femtocell or picocell access points, mobile base stations, relay nodes, hot-spots, routers, gateways, *etc.,* while devices may be referred to or implemented as user equipment (UE), mobile devices, access terminals, modems (or other tethered devices), and so on.

Access points in the system 100 provide one or more services (*e.g.,* network connectivity) for one or more wired or wireless devices (*e.g.,* device 102) that can be installed within or that can travel throughout a coverage area of the system 100. For example, at various points in time, device 102 can connect to an access point 104 or some other access point in the system 100 (not shown) over a wired or wireless interface. Each of these access points can communicate with one or more network nodes (represented, for example, by network node(s) 106 and/or 108) to facilitate wide area network connectivity. Network nodes 106 and 108 can take various forms such as, for example, one or more radio and/or core network entities. Thus, in various examples, network nodes 106 and 108 can represent functionality such as at least one of: network management (*e.g., via* an operation, administration, management, and provisioning entity), call control, session management, mobility management, gateway functions, interworking functions, or some other suitable network functionality. Network nodes 106 can include a mobility manager 110, which can be a mobility management entity (MME), serving general packet radio services (GPRS) support node (SGSN), mobile switching center (MSC), visitor location register (VLR), and/or the like. Network nodes 108 can include a home subscriber server (HSS) 112 or other nodes. In addition, for example network nodes 106 can communicate with network nodes 108 *via* at least one of Internet 116, one or more other routers or gateways (not shown), and/or the like.

In some cases, device 102 can access a restricted group access point (*e.g.,* access point 104) associated with a wireless cell set. In general, a wireless cell set comprises a set of one or more cells (*e.g.,* provided by at least one access point) where there is a defined relationship specific to that set. An example of a wireless cell set is a closed subscriber group (CSG). For convenience, the discussion that follows may simply refer to the term CSG, rather than the more general term wireless cell set. It should be appreciated, however, that the described concepts may be applicable to other types of defined sets or groups (*e.g.,* restricted groups) of wireless cells or other similar entities. Also, restricted groups can provide a diminished level of access to non-members (*e.g.,* hybrid cells), to which aspects described herein can apply as well. In addition, it is to be appreciated that an access point can provide one or more cells within which devices can communicate with the access point.

As depicted, access point 104 can be coupled to a router 114 or other device to access Internet 116, and access point 104 can communicate with network nodes 106 and 108 *via* Internet 116. Router 114 can additionally provide Internet 116 access to local network devices 118 and 120. For example, local network devices 118 and 120 can be substantially any device operable to communicate in a network, such as a local area network (LAN) or wireless LAN (WLAN) device (*e.g.,* a computer, server, printer, digital video recorder (DVR), mobile device, a portion thereof, or substantially any device with a processor (or access to a processor) and a network interface, *etc*.), and/or the like. In another example, a router (*e.g.,* router 114 or another router) can be co-located at access point 104, and access point 104 can be coupled to Internet 116, providing broadband access to router 114 and/or local network devices 118 and 120 directly.

In this example, access point 104 participates in a local network with local network devices 118 and 120, and can thus access resources or services offered by local network device 118 and 120 in the local network, and/or can allow access to resources related to access point 104 or provide services thereto. In this regard, access point 104 can provide LIPA to devices communicating with access point 104 using a radio interface, such as device 102, allowing such devices to perform actions such as at least one of accessing the services or resources of the local network, and/or providing local network devices with 118 and 120 with services or access to resources of the device *via* access point 104. In an example, access point 104 can be in a visited network (*e.g.,* a visited public land mobile network (VPLMN), *etc.*) for device 102 and visited network can include network nodes 106. An operator of a home network (*e.g.,* home public land mobile network (HPLMN), *etc*.) of device 102 may wish to control whether device 102 should be allowed LIPA at the visited network, (*e.g.,* the VPLMN). In this regard, one or more network nodes 108 (*e.g.,* HSS 112) can provide an indicator of whether device 102 is allowed LIPA to one or more network nodes 106 (*e.g.* mobility manager 110) of the VPLMN, and the VPLMN can utilize the indicator to determine whether to process device 102 requests for LIPA, as described further herein.

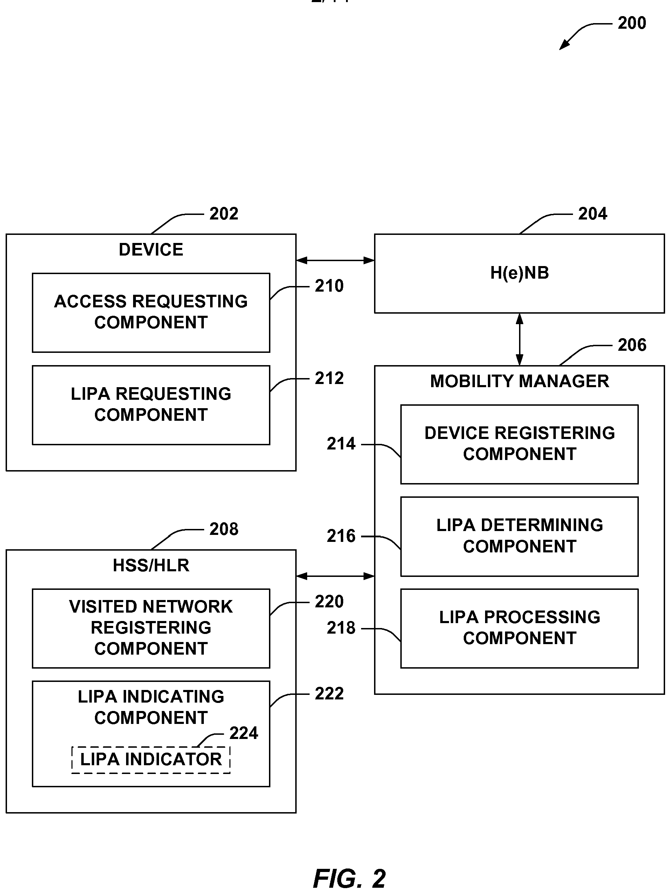

Turning to **Fig. 2****,** an example wireless communication system 200 is illustrated that facilitates providing LIPA to a device in a visited network. System 200 can include a device 202 that can communicate with one or more access points to receive access to a wireless network, an H(e)NB 204 that provides restricted access to one or more devices, and a mobility manager 206 that authorizes one or more devices to communicate with one or more core network components. System 200 can additionally comprise a home subscriber server (HSS)/home location register (HLR) 208 related to the device 202. In one example, device 202 can be a UE, modem (or other tethered device), a portion thereof, and/or the like, and H(e)NB ' can be a femtocell, picocell, or similar access point, a portion thereof, *etc.,* as described. In addition, for example, mobility manager 206 can be a MME, SGSN, MSC, VLR, or similar node. Moreover, it is to be appreciated that additional components or nodes can be present between those shown (*e.g.,* one or more gateways can be present between mobility manager 206 and HSS/HLR 208, *etc*.) to facilitate access.

Device 202 can comprise an access requesting component 210 for attempting to access one or more access points in a HPLMN or VPLMN, and a LIPA requesting component 212 for transmitting a request for LIPA in the HPLMN or VPLMN.

Mobility manager 206 can comprise a device registering component 214 for performing a registration for one or more devices over a related public land mobile network (PLMN), a LIPA determining component 216 for determining whether the one or more devices are allowed LIPA in the PLMN, and a LIPA processing component 218 for fulfilling LIPA requests from the device 202 based on the determination.

HSS/HLR 208 can comprise a visited network registering component 220 that can allow a device to be registered on a VPLMN and can provide one or more service parameters to the VPLMN for the device, and a LIPA indicating component 222 that can specify whether the device is allowed to request LIPA at the VPLMN.

According to an example, device 202 can relate to a network operator that provides a PLMN, which can be an HPLMN for device 202. HSS/HLR 208 can additionally be a node in the HPLMN that stores subscription information for device 202. H(e)NB 204 and mobility manager 206 can be part of a PLMN provided by a different network operator, which can be a VPLMN of device 202. Access requesting component 210, however, can attempt access to one or more access points of the VPLMN, such as H(e)NB 204, and H(e)NB 204 can notify mobility manager 206 of the access attempt to facilitate authenticating/authorizing the device 202 at the VPLMN. In this example, device 202 can perform a registration or attach procedure with the VPLMN. In one example, access requesting component 210 can send an attach request, registration request, tracking area update (TAU), location area update (LAU), routing area update (RAU), or similar request to H(e)NB 204, and H(e)NB 204 can forward the message to mobility manager 206. In either case, device registering component 214 can accordingly obtain one or more device 202 parameters from H(e)NB 204 (*e.g.,* from the attach request, registration request, TAU, LAU, RAU or similar message).

In this example, device registering component 214 can request registration for device 202 on the VPLMN from HSS/HLR 208. For example, this can be part of an Update Location Request, or similar message. Visited network registering component 220 can obtain the request for registering device 202, and LIPA indicating component 222 can provide device subscription information related to device 202 to mobility manager 206. For example, this can be part of an Update Location Acknowledgement message, an Insert Subscriber Data message, and/or similar messages used to provision device information in an LTE or other network. In one example, the device subscription information can include CSG subscription information for device 202, which can refer to a list of CSGs of which device 202 is a member (*e.g.,* a list of identifiers), access level, and/or substantially any parameters related to the CSG membership. Device registering component 214 can receive the device subscription information for providing network access to device 202 in accordance with the device subscription information.

As part of the device subscription information, and/or in other messages related to registration, attachment, *etc.* of device 202, LIPA indicating component 222 can additionally communicate a LIPA indicator 224 to mobility manager 206 that specifies whether device 202 is allowed to utilize LIPA in the VPLMN (and/or with one or more CSG access points thereof). In one example, LIPA indicating component 222 can optionally determine and/or store the LIPA indicator 224 for a specific device 202. For example, the LIPA indicator 224 can be initialized by a network operator (*e.g., via* an interface to the LIPA indicating component 222) based at least in part on operator policy, a roaming agreement, a subscription class, a billing model, *etc.,* which can be specific to device 202 and/or a related user/subscriber. In addition, the LIPA indicator 224 can apply for a given VPLMN (and thus LIPA indicating component 222 can include multiple LIPA indicators 224 each for a different VPLMN). In another example, LIPA indicating component 222 can optionally determine or store LIPA indicators of varying granularity, such as for one or more CSGs of the VPLMN, one or more specific H(e)NBs or other access points, generally to any visited network, and/or the like. In one specific alternative example, the CSG subscription information can be a list of CSG identifiers along with corresponding LIPA indicators. In either case, for example, the LIPA indicator 224 can be part of CSG subscription information received for device 202.

Thus, for example, LIPA indicating component 222 can determine a LIPA indicator, such as LIPA indicator 224, for device 202 as related to a VPLMN of mobility manager 206, which can be inferred or received in the device subscription information or another request for the LIPA indicator 224. In another example, LIPA indicating component 222 can determine the LIPA indicator 224 as related to a CSG of H(e)NB 204, which can be inferred or received in the request for subscription information or another request for the LIPA indicator 224 from mobility manager 206. In either case, LIPA indicating component 222 can provide the LIPA indicator 224 to mobility manager 206. In an example, LIPA indicating component 222 can transmit the LIPA indicator 224 in the device subscription information for device 202 (*e.g.,* along with one or more lists of CSGs). In another example, the LIPA indicator 224 can correspond to an operator controlled list of VPLMNs, CSGs, H(e)NBs, *etc.* for which a device cannot use LIPA (or alternatively can use LIPA).

LIPA determining component 216 can obtain the LIPA indicator 224 (e.g., from the device subscription information or otherwise). Where the LIPA indicator 224 specifies that device 202 is allowed to utilize LIPA in the VPLMN, with a CSG associated with H(e)NB 204, and/or H(e)NB itself, LIPA processing component 218 can determine to allow device 202 to utilize LIPA in the VPLMN (*e.g.,* and/or with the CSG related to H(e)NB 204). In one example, LIPA determining component 216 can receive the LIPA indicator 224 in an Update CSG Location Request Acknowledgement message or similar message communicated in an LTE network. In one example, LIPA processing component 218 can notify device 202 of the ability to request LIPA in the VPLMN (*e.g.,* and/or for the CSG related to H(e)NB 204).

In an example, LIPA requesting component 212 can request LIPA in a network related to H(e)NB 204. For example, this can include a specific request to communicate with one or more devices in the network, a request to discover resources available in the network, *etc.* Thus, where LIPA determining component 216 determines that device 202 is allowed to utilize LIPA (*e.g.,* based on the received LIPA indicator 224), LIPA processing component 218 can enable LIPA for device 202 at H(e)NB 204. For example, this can include providing LIPA services for device 202 (*e.g.,* establishing an IP flow or other communication context at H(e)NB 204 for general LIPA by device 202, an IP flow or other communication context for accessing one or more specific network devices using H(e)NB 204, allowing communication of LIPA packets from device 202, *etc*.) and/or the like. Where LIPA determining component 216 determines that device 202 is not allowed to utilize LIPA, LIPA processing component 218 can reject LIPA access attempts from device 202. In another example, it is to be appreciated that LIPA determining component 216 can request a LIPA indicator for device 202 from HSS/HLR 208 upon receiving the request for LIPA from device 202.

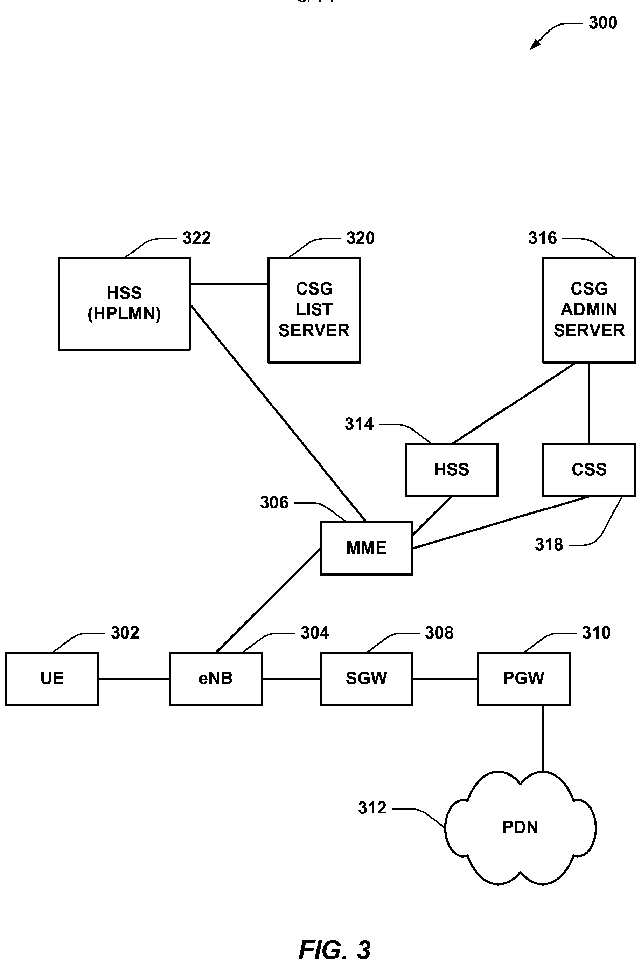

Turning to **Fig. 3****,** an example wireless communication network 300 is depicted that comprises entities such as UE 302 and one or more components of a VPLMN, such as an eNB 304 (*e.g.,* H(e)NB), a MME 306, a serving gateway (SGW) 308, a packet data network (PDN) gateway (PGW) 310, a PDN 312, a HSS 314, and a CSG administration server 316, and a CSG subscription server (CSS) 318. Network 300 can also comprise a CSG list server 320, and an HSS 322 of an HPLMN of UE 302. Though shown an generally described in relation to a 3GPP LTE network, it is to be appreciated, however, that the concepts described herein may be applicable to other implementations (*e.g.,* a UMTS-based system, *etc*.), which can include additional or alternative nodes.

According to an example, UE 302 can attempt access to eNB 304 of the VPLMN (*e.g.,* by sending an attach request, registration request, TAU, LAU, RAU, or similar message thereto). eNB 304 can forward one or more messages related to the access attempt to MME 306. MME 306 can determine the UE 302 is a member of another network, and can query HSS 322 for device subscription information related to UE 302. In one example, HSS 322 can request CSG subscription information from CSG list server 320, which can include one or more lists of CSGs of which UE 302 is a member. As described, HSS 322 can provide the device subscription information, which can include the CSG subscription information, to MME 306 along with a LIPA indicator. MME 306 can obtain the LIPA indicator, and can determine whether to provide LIPA to UE 302 based at least in part on the LIPA indicator.

For example, where the LIPA indicator specifies that UE 302 is not allowed to utilize LIPA in the VPLMN (*e.g.,* or in a CSG related to eNB 304 within the VPLMN), MME 306 can deny or not process LIPA requests from UE 302. In another example, where the LIPA indicator specifies that UE 302 is allowed LIPA in the VPLMN (or CSG), MME 306 can facilitate LIPA between UE 302 and eNB 304 at least in part by establishing an IP flow at eNB 304 for accessing local network devices.

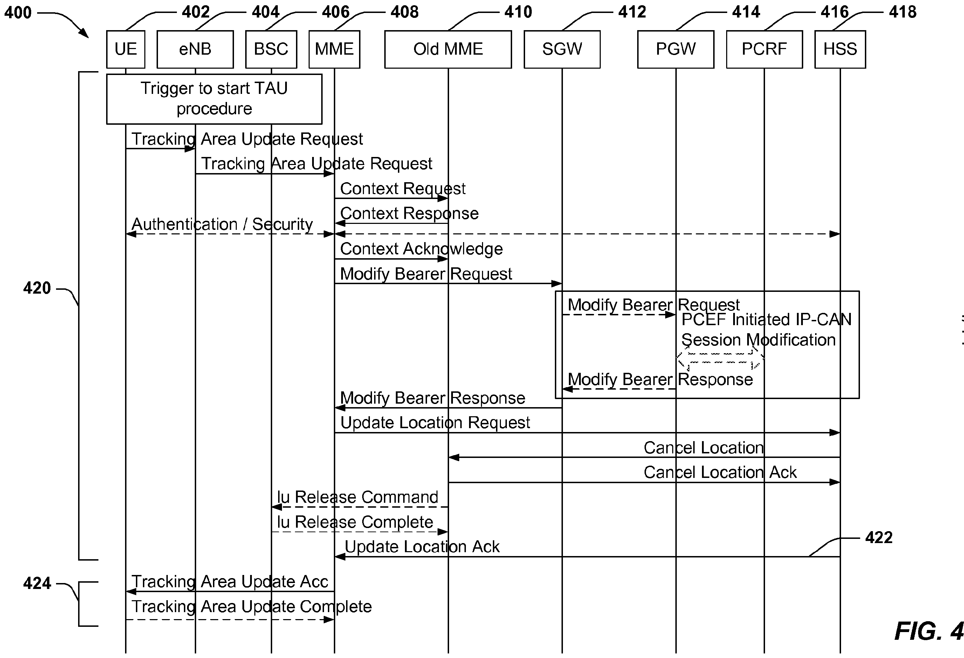

Referring to **Fig. 4****,** an example wireless communication system 400 is illustrated that performs a TAU procedure including determining to request LIPA information for a UE on a visited network. System 400 can include a UE 402, eNB 404 (*e.g.,* H(e)NB), base station controller (BSC) (and/or radio network controller (RNC)) 406, MME 408, old MME 410 (either of which can be an SGSN and/or the like), SGW 412, PGW 414, policy charging and rules function (PCRF) 416, and an HSS 418. It is to be appreciated that HSS 418 can be in a HPLMN of UE 402, while the remaining nodes are part of a VPLMN, for example. Messages 420 are shown relating to performing a TAU procedure in an LTE, or similar E-UTRA network, including a trigger to start the TAU procedure at UE 402, a TAU request between UE 402 and eNB 404, the TAU request forwarded from eNB 402 to MME 408, a context request and response, optional authentication and/or security for UE 402 between MME 408 and HSS 418, a context acknowledge, a modify bearer request to SGW 412, a corresponding modify bearer request from SGW 412 to PGW 414, a policy and charging enforcement function (PCEF) initiated internet protocol connectivity access network (IP-CAN) session modification, corresponding modify bearer responses, an Update Location Request from MME 408 to HSS 418, as described above, a cancel location and corresponding acknowledgement between the old MME 410 and HSS 418, and an lu release command and lu release complete for the BSC 404.

HSS 418 can transmit an Update Location Acknowledgement 422 to MME 408, which can include subscription information related to UE 402. Additionally, as described, the Update Location Acknowledgement 422 can also include a LIPA indicator to specify whether UE 402 is allowed to utilize LIPA in the VPLMN of MME 408 or a CSG related to eNB 404. In the latter example, for instance, MME 408 can indicate the CSG to HSS 418 (*e.g.,* in the Update Location Request or other message). Additional TAU procedure messages 424 are shown including a TAU accept from MME 408 and an optional TAU complete from UE 402.

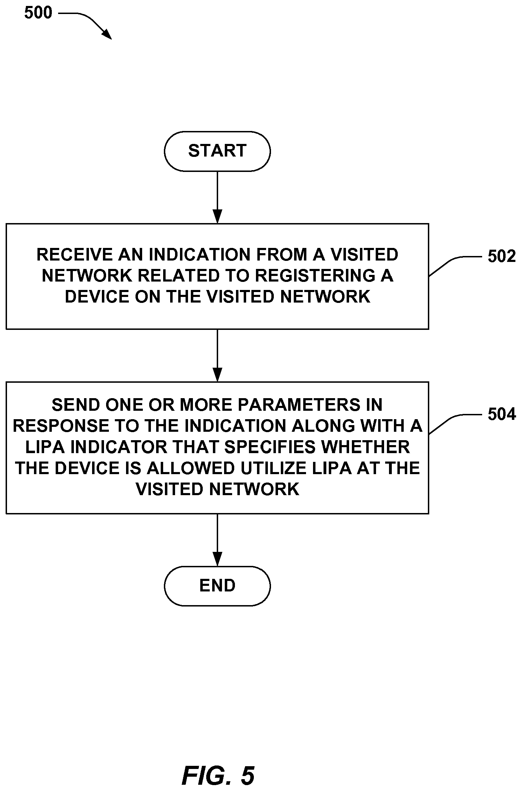

Referring to **Figs. 5-6****,** example methodologies relating to controlling LIPA for a device in a visited network are illustrated. While, for purposes of simplicity of explanation, the methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a methodology in accordance with one or more embodiments.

Referring to **Fig. 5****,** an example methodology 500 is displayed that facilitates indicating whether a device is allowed to utilize LIPA in a visited network. At 502, an indication related to registering a device on a visited network can be received from the visited network. For example, the device can be requesting access to an H(e)NB on the visited network. The indication can be part of an Update Location Request transmitted by an MME or similar node in the visited network. At 504, one or more parameters can be sent in response to the indication along with a LIPA indicator that specifies whether the device is allowed to utilize LIPA at the visited network. For example, the one or more parameters can relate to subscription information for the device or a related user. The LIPA indicator in an example, can be initialized by a network operator based on operator policy, a roaming agreement, a subscription class, a billing model, *etc.,* as described. Moreover, the LIPA indicator can be specific to the visited network, a CSG within the visited network, *etc.,* and/or can apply generally to visited networks. In addition, for example, the parameters and/or LIPA indicator can be sent in an Update Location Acknowledgement, as described.

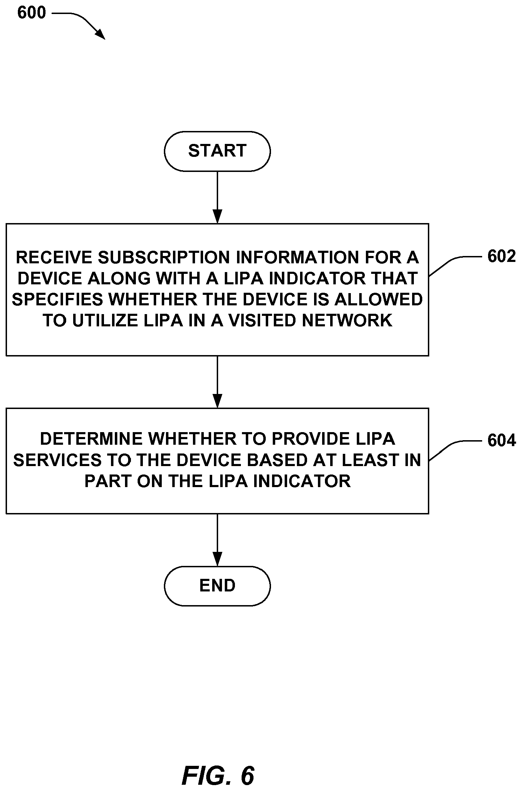

Turning to **Fig. 6****,** an example methodology 600 is displayed that facilitates determining whether to provide LIPA services to a device based on a LIPA indicator. At 602, subscription information for a device can be received along with a LIPA indicator that specifies whether the device is allowed to utilize LIPA in a visited network. As described, the subscription information and/or LIPA indicator can be received in an Update Location Acknowledgement message received in response to an Update Location Request sent to register the device on the visited network. At 604, it can be determined whether to provide LIPA services to the device based at least in part on the LIPA indicator. Thus, for example, where the LIPA indicator specifies the device is allowed to utilize LIPA in the visited network, LIPA services can be provided to the device. For example, this can include establishing an IP flow for the device at an access point to receive and/or transmit LIPA communications.

It will be appreciated that, in accordance with one or more aspects described herein, inferences can be made regarding initializing a LIPA indicator, and/or the like, as described. As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

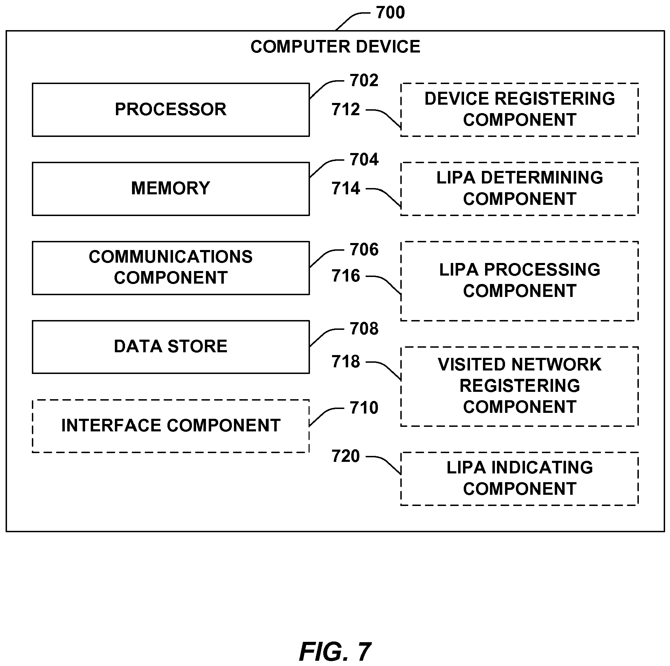

Referring to **Fig. 7****,** in one aspect, any of network nodes 106 or 108, mobility manager 110 or 206, HSS/HLRs 112, 208, 314, 322, or 418, MMEs 306, 408, or 410, SGWs 308 or 412, PGWs 310 or 414, nodes of PDN 312, CSG administration server 316, CSSs 318, or 420, CSG list server 320, *etc.* (*e.g.,* **Figs. 1-4**) can be represented by computer device 700. Computer device 700 includes a processor 702 for carrying out processing functions associated with one or more of components and functions described herein. Processor 702 can include a single or multiple set of processors or multi-core processors. Moreover, processor 702 can be implemented as an integrated processing system and/or a distributed processing system.

Computer device 700 further includes a memory 704, such as for storing local versions of applications being executed by processor 702. Memory 704 can include substantially any type of memory usable by a computer, such as random access memory (RAM), read only memory (ROM), tapes, magnetic discs, optical discs, volatile memory, non-volatile memory, and any combination thereof. Computer device 700 also includes one or more components 706 - 728, which can be stored in memory 704, executed by processor 702 (*e.g.,* based on instructions stored in memory 704), be implemented within one or more processors 702, and/or the like.

Further, computer device 700 includes a communications component 706 that provides for establishing and maintaining communications with one or more parties utilizing hardware, software, and services as described herein. Communications component 706 may carry communications between components on computer device 700, as well as between computer device 700 and external devices, such as devices located across a communications network and/or devices serially or locally connected to computer device 700. For example, communications component 706 may include one or more buses, and may further include transmit chain components and receive chain components associated with a transmitter and receiver, respectively, operable for interfacing with external devices.

Additionally, computer device 700 may further include a data store 708, which can be any suitable combination of hardware and/or software, that provides for mass storage of information, databases, and programs employed in connection with aspects described herein. For example, data store 708 may be a data repository for applications not currently being executed by processor 702.

Computer device 700 may optionally include an interface component 710 operable to receive inputs from a user of computer device 700, and further operable to generate outputs for presentation to the user. Interface component 710 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, interface component 710 may include one or more output devices, including but not limited to a display, a speaker, a haptic feedback mechanism, a printer, any other mechanism capable of presenting an output to a user, or any combination thereof. In another example, interface component 710 can be an application programming interface (API) that can be accessed by one or more devices to perform functions on computer device 700.

In addition, in the depicted example, computer device 700 can optionally include one or more of device registering component 712, which can be similar to device registering component 214, a LIPA determining component 714, which can be similar to LIPA determining component 216, a LIPA processing component 716, which can be similar to LIPA processing component 218, a visited network registering component 718, which can be similar to visited network registering component 220, and/or a LIPA indicating component 720, which can be similar to LIPA indicating component 222. Thus, these components 712, 714, 716, 718, and/or 720 can utilize processor 702 to execute instructions associated therewith, memory 704 to store information associated therewith, communications component 706 to carry out communications, and/or the like, as described. In addition, it is to be appreciated that computer device 700 can include additional or alternative components described herein.

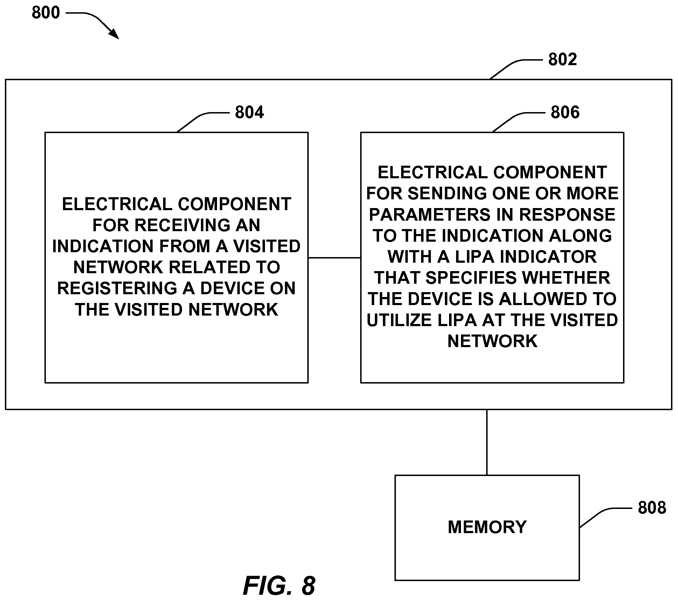

With reference to **Fig. 8****,** illustrated is a system 800 that specifies whether a device is allowed to utilize LIPA in a visited network. For example, system 800 can reside at least partially within an HSS/HLR, *etc.* It is to be appreciated that system 800 is represented as including functional blocks, which can be functional blocks that represent functions implemented by a processor, software, or combination thereof (*e.g.,* firmware). System 800 includes a logical grouping 802 of electrical components that can act in conjunction. For instance, logical grouping 802 can include an electrical component for receiving an indication from a visited network related to registering a device on the visited network 804. As described, this can include receiving an Update Location Request from an MME in the visited network.

Further, logical grouping 802 can comprise an electrical component for sending one or more parameters in response to the indication along with a LIPA indicator that specifies whether the device is allowed to utilize LIPA at the visited network 806. For example, the LIPA indicator can be initialized by a network operator, as described, and can be specific to one or more visited networks, a CSG within the one or more visited networks, a specific H(e)NB, generic to any visited network, *etc.* For example, the LIPA indicator can allow for determining whether to provide LIPA services to the device, as described. For example, electrical component 804 can include a visited network registering component 220, as described above. In addition, for example, electrical component 806, in an aspect, can include a LIPA indicating component 222, as described above. Additionally, system 800 can include a memory 808 that retains instructions for executing functions associated with the electrical components 804 and 806. While shown as being external to memory 808, it is to be understood that one or more of the electrical components 804 and 806 can exist within memory 808.

In one example, electrical components 804 and 806 can comprise at least one processor, or each electrical component 804 and 806 can be a corresponding module of at least one processor. Moreover, in an additional or alternative example, electrical components 804 and 806 can be a computer program product comprising a computer readable medium, where each electrical component 804 and 806 can be corresponding code.

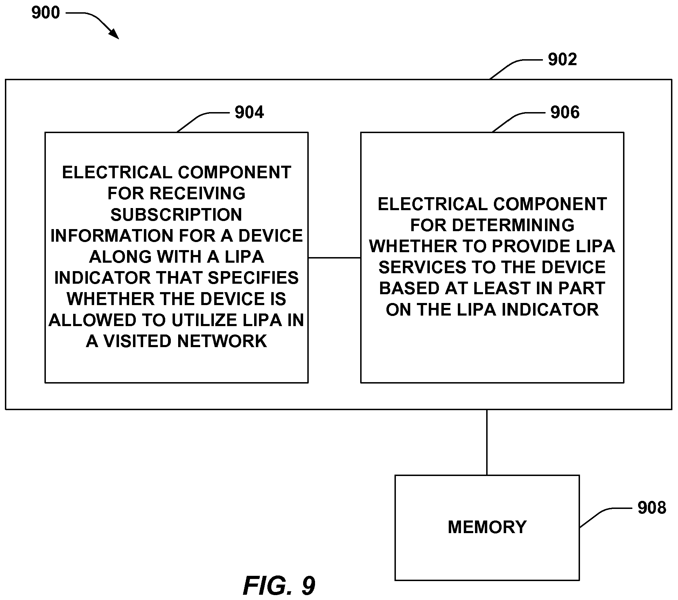

With reference to **Fig. 9****,** illustrated is a system 900 that determines whether to provide LIPA services to a device. For example, system 900 can reside at least partially within a MME, *etc.* It is to be appreciated that system 900 is represented as including functional blocks, which can be functional blocks that represent functions implemented by a processor, software, or combination thereof (*e.g.,* firmware). System 900 includes a logical grouping 902 of electrical components that can act in conjunction. For instance, logical grouping 902 can include an electrical component for receiving subscription information for a device along with a LIPA indicator that specifies whether the device is allowed to utilize LIPA in a visited network 904. As described, this can include receiving LIPA indicator and/or subscription information for the device in an Update Location Acknowledgement or similar message.

Further, logical grouping 902 can comprise an electrical component for determining whether to provide LIPA services to the device based at least in part on the LIPA indicator 906. As described, for example, where the LIPA indicator specifies that the device can utilize LIPA in the visited network, LIPA services can be provided to the device. For example, this can include establishing one or more IP flows for the device to use LIPA at an access point. For example, electrical component 904 can include a device registering component 214, as described above. In addition, for example, electrical component 906, in an aspect, can include a LIPA determining component 216, as described above. Additionally, system 900 can include a memory 908 that retains instructions for executing functions associated with the electrical components 904 and 906. While shown as being external to memory 908, it is to be understood that one or more of the electrical components 904 and 906 can exist within memory 908.

In one example, electrical components 904 and 906 can comprise at least one processor, or each electrical component 904 and 906 can be a corresponding module of at least one processor. Moreover, in an additional or alternative example, electrical components 904 and 906 can be a computer program product comprising a computer readable medium, where each electrical component 904 and 906 can be corresponding code.

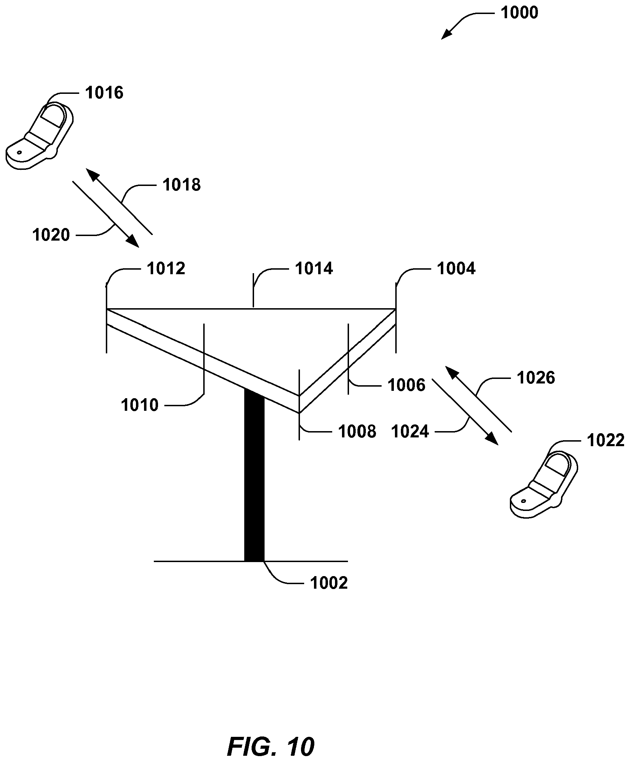

Referring now to **Fig. 10****,** a wireless communication system 1000 is illustrated in accordance with various embodiments presented herein. System 1000 comprises a base station 1002 that can include multiple antenna groups. For example, one antenna group can include antennas 1004 and 1006, another group can comprise antennas 1008 and 1010, and an additional group can include antennas 1012 and 1014. Two antennas are illustrated for each antenna group; however, more or fewer antennas can be utilized for each group. Base station 1002 can additionally include a transmitter chain and a receiver chain, each of which can in turn comprise a plurality of components associated with signal transmission and reception (*e.g.,* processors, modulators, multiplexers, demodulators, demultiplexers, antennas, *etc*.), as is appreciated.

Base station 1002 can communicate with one or more mobile devices such as mobile device 1016 and mobile device 1022; however, it is to be appreciated that base station 1002 can communicate with substantially any number of mobile devices similar to mobile devices 1016 and 1022. Mobile devices 1016 and 1022 can be, for example, cellular phones, smart phones, laptops, handheld communication devices, handheld computing devices, satellite radios, global positioning systems, PDAs, and/or any other suitable device for communicating over wireless communication system 1000. As depicted, mobile device 1016 is in communication with antennas 1012 and 1014, where antennas 1012 and 1014 transmit information to mobile device 1016 over a forward link 1018 and receive information from mobile device 1016 over a reverse link 1020. Moreover, mobile device 1022 is in communication with antennas 1004 and 1006, where antennas 1004 and 1006 transmit information to mobile device 1022 over a forward link 1024 and receive information from mobile device 1022 over a reverse link 1026. In a frequency division duplex (FDD) system, forward link 1018 can utilize a different frequency band than that used by reverse link 1020, and forward link 1024 can employ a different frequency band than that employed by reverse link 1026, for example. Further, in a time division duplex (TDD) system, forward link 1018 and reverse link 1020 can utilize a common frequency band and forward link 1024 and reverse link 1026 can utilize a common frequency band.

Each group of antennas and/or the area in which they are designated to communicate can be referred to as a sector of base station 1002. For example, antenna groups can be designed to communicate to mobile devices in a sector of the areas covered by base station 1002. In communication over forward links 1018 and 1024, the transmitting antennas of base station 1002 can utilize beamforming to improve signal-to-noise ratio of forward links 1018 and 1024 for mobile devices 1016 and 1022. Also, while base station 1002 utilizes beamforming to transmit to mobile devices 1016 and 1022 scattered randomly through an associated coverage, mobile devices in neighboring cells can be subject to less interference as compared to a base station transmitting through a single antenna to all its mobile devices. Moreover, mobile devices 1016 and 1022 can communicate directly with one another using a peer-to-peer or ad hoc technology as depicted. According to an example, system 1000 can be a multiple-input multiple-output (MIMO) communication system.

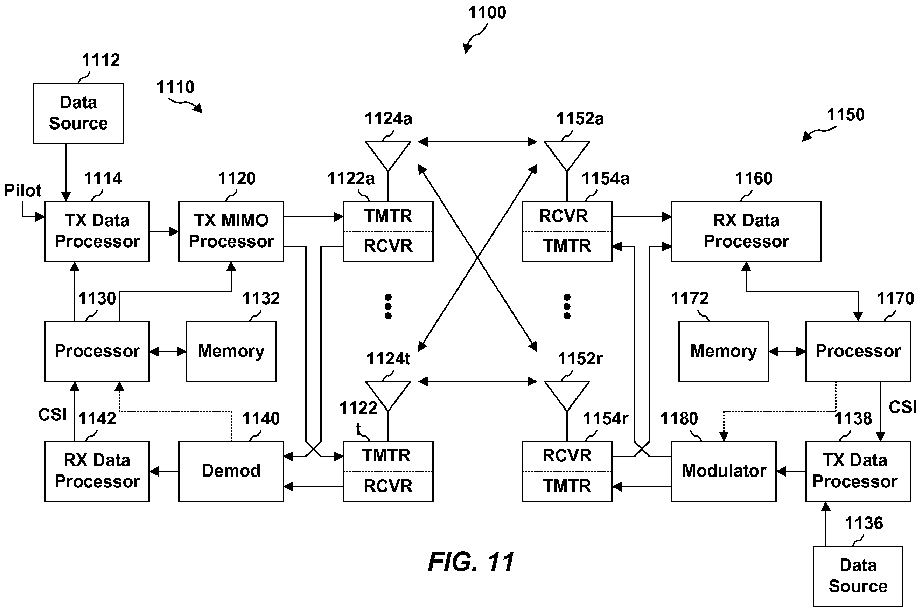

**Fig. 11** shows an example wireless communication system 1100. The wireless communication system 1100 depicts one base station 1110 and one mobile device 1150 for sake of brevity. However, it is to be appreciated that system 1100 can include more than one base station and/or more than one mobile device, wherein additional base stations and/or mobile devices can be substantially similar or different from example base station 1110 and mobile device 1150 described below. In addition, it is to be appreciated that base station 1110 and/or mobile device 1150 can employ the systems (**Figs. 1-4** **and** **8-10**), computer devices, (**Fig. 7**), and/or methods (**Figs. 5-6**) described herein to facilitate wireless communication there between. For example, components or functions of the systems and/or methods described herein can be part of a memory 1132 and/or 1172 or processors 1130 and/or 1170 described below, and/or can be executed by processors 1130 and/or 1170 to perform the disclosed functions.

At base station 1110, traffic data for a number of data streams is provided from a data source 1112 to a transmit (TX) data processor 1114. According to an example, each data stream can be transmitted over a respective antenna. TX data processor 1114 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 1150 to estimate channel response. The multiplexed pilot and coded data for each data stream can be modulated (*e.g.,* symbol mapped) based on a particular modulation scheme (*e.g.,* binary phase-shift keying (BPSK), quadrature phase-shift keying (QPSK), M-phase-shift keying (M-PSK), M-quadrature amplitude modulation (M-QAM), *etc*.) selected for that data stream to provide modulation symbols. The data rate, coding, and modulation for each data stream can be determined by instructions performed or provided by processor 1130.

The modulation symbols for the data streams can be provided to a TX MIMO processor 1120, which can further process the modulation symbols (*e.g.,* for OFDM). TX MIMO processor 1120 then provides NT modulation symbol streams to NT transmitters (TMTR) 1122a through 1122t. In various embodiments, TX MIMO processor 1120 applies beamforming weights to the symbols of the data streams and to the antenna from which the symbol is being transmitted.

Each transmitter 1122 receives and processes a respective symbol stream to provide one or more analog signals, and further conditions (*e.g.,* amplifies, filters, and upconverts) the analog signals to provide a modulated signal suitable for transmission over the MIMO channel. Further, NT modulated signals from transmitters 1122a through 1122t are transmitted from NT antennas 1124a through 1124t, respectively.

At mobile device 1150, the transmitted modulated signals are received by NR antennas 1152a through 1152r and the received signal from each antenna 1152 is provided to a respective receiver (RCVR) 1154a through 1154r. Each receiver 1154 conditions (*e.g.,* filters, amplifies, and downconverts) a respective signal, digitizes the conditioned signal to provide samples, and further processes the samples to provide a corresponding "received" symbol stream.

An RX data processor 1160 can receive and process the NR received symbol streams from NR receivers 1154 based on a particular receiver processing technique to provide NT "detected" symbol streams. RX data processor 1160 can demodulate, deinterleave, and decode each detected symbol stream to recover the traffic data for the data stream. The processing by RX data processor 1160 is complementary to that performed by TX MIMO processor 1120 and TX data processor 1114 at base station 1110.

The reverse link message can comprise various types of information regarding the communication link and/or the received data stream. The reverse link message can be processed by a TX data processor 1138, which also receives traffic data for a number of data streams from a data source 1136, modulated by a modulator 1180, conditioned by transmitters 1154a through 1154r, and transmitted back to base station 1110.

At base station 1110, the modulated signals from mobile device 1150 are received by antennas 1124, conditioned by receivers 1122, demodulated by a demodulator 1140, and processed by a RX data processor 1142 to extract the reverse link message transmitted by mobile device 1150. Further, processor 1130 can process the extracted message to determine which precoding matrix to use for determining the beamforming weights.

Processors 1130 and 1170 can direct (*e.g.,* control, coordinate, manage, *etc*.) operation at base station 1110 and mobile device 1150, respectively. Respective processors 1130 and 1170 can be associated with memory 1132 and 1172 that store program codes and data. Processors 1130 and 1170 can also perform computations to derive frequency and impulse response estimates for the uplink and downlink, respectively.

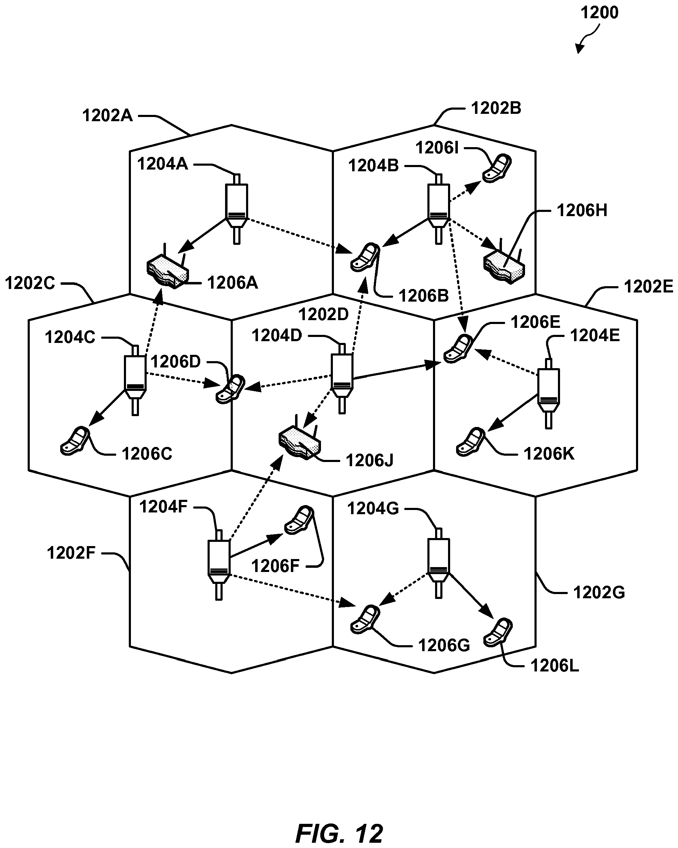

**Fig. 12** illustrates a wireless communication system 1200, configured to support a number of users, in which the teachings herein may be implemented. The system 1200 provides communication for multiple cells 1202, such as, for example, macro cells 1202A - 1202G, with each cell being serviced by a corresponding access node 1204 (*e.g.,* access nodes 1204A - 1204G). As shown in **Fig. 12****,** access terminals 1206 (*e.g.,* access terminals 1206A - 1206L) can be dispersed at various locations throughout the system over time. Each access terminal 1206 can communicate with one or more access nodes 1204 on a forward link (FL) and/or a reverse link (RL) at a given moment, depending upon whether the access terminal 1206 is active and whether it is in soft handoff, for example. The wireless communication system 1200 can provide service over a large geographic region.

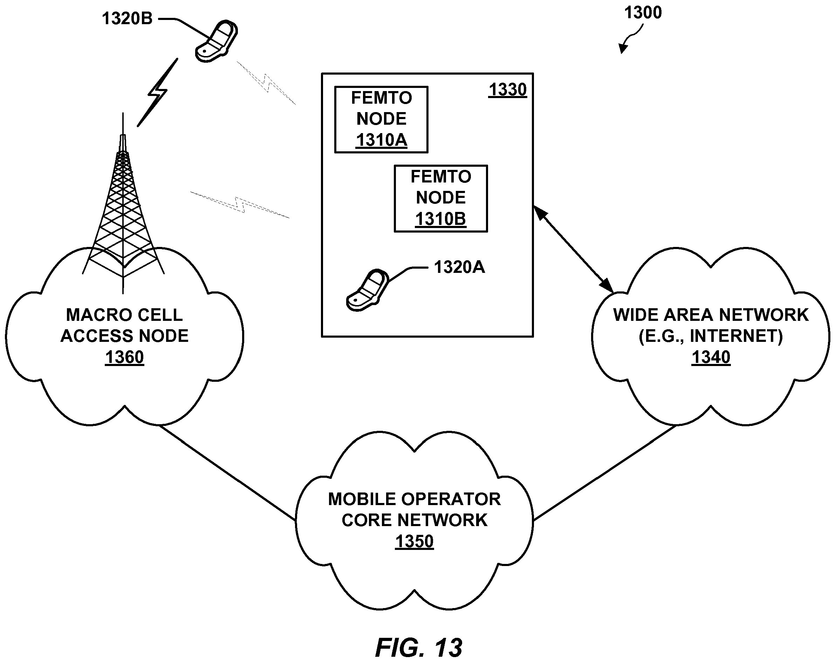

**Fig. 13** illustrates an exemplary communication system 1300 where one or more femto nodes are deployed within a network environment. Specifically, the system 1300 includes multiple femto nodes 1310A and 1310B (*e.g.,* femtocell nodes or H(e)NB) installed in a relatively small scale network environment (*e.g.,* in one or more user residences 1330). Each femto node 1310 can be coupled to a wide area network 1340 (*e.g.,* the Internet) and a mobile operator core network 1350 *via* a digital subscriber line (DSL) router, a cable modem, a wireless link, or other connectivity means (not shown). As will be discussed below, each femto node 1310 can be configured to serve associated access terminals 1320 (*e.g.,* access terminal 1320A) and, optionally, alien access terminals 1320 (*e.g.,* access terminal 1320B). In other words, access to femto nodes 1310 can be restricted such that a given access terminal 1320 can be served by a set of designated (*e.g.,* home) femto node(s) 1310 but may not be served by any non-designated femto nodes 1310 (*e.g.,* a neighbor's femto node).

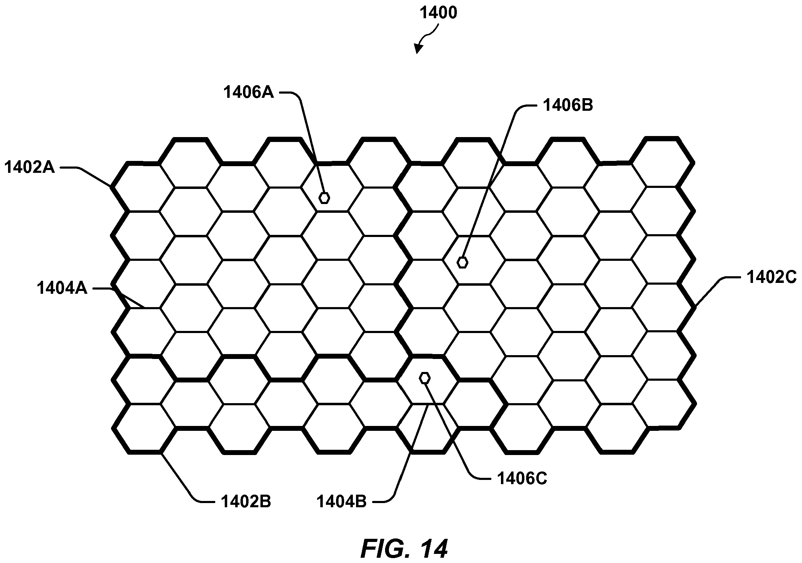

**Fig. 14** illustrates an example of a coverage map 1400 where several tracking areas 1402 (or routing areas or location areas) are defined, each of which includes several macro coverage areas 1404. Here, areas of coverage associated with tracking areas 1402A, 1402B, and 1402C are delineated by the wide lines and the macro coverage areas 1404 are represented by the hexagons. The tracking areas 1402 also include femto coverage areas 1406. In this example, each of the femto coverage areas 1406 (*e.g.,* femto coverage area 1406C) is depicted within a macro coverage area 1404 (*e.g.,* macro coverage area 1404B). It should be appreciated, however, that a femto coverage area 1406 may not lie entirely within a macro coverage area 1404. In practice, a large number of femto coverage areas 1406 can be defined with a given tracking area 1402 or macro coverage area 1404. Also, one or more pico coverage areas (not shown) can be defined within a given tracking area 1402 or macro coverage area 1404.

Referring again to **Fig. 13****,** the owner of a femto node 1310 can subscribe to mobile service, such as, for example, 3G mobile service, offered through the mobile operator core network 1350. In addition, an access terminal 1320 can be capable of operating both in macro environments and in smaller scale (*e.g.,* residential) network environments. Thus, for example, depending on the current location of the access terminal 1320, the access terminal 1320 can be served by an access node 1360 or by any one of a set of femto nodes 1310 (*e.g.,* the femto nodes 1310A and 1310B that reside within a corresponding user residence 1330). For example, when a subscriber is outside his home, he is served by a standard macro cell access node (*e.g.,* node 1360) and when the subscriber is at home, he is served by a femto node (*e.g.,* node 1310A). Here, it should be appreciated that a femto node 1310 can be backward compatible with existing access terminals 1320.

A femto node 1310 can be deployed on a single frequency or, in the alternative, on multiple frequencies. Depending on the particular configuration, the single frequency or one or more of the multiple frequencies can overlap with one or more frequencies used by a macro cell access node (e.g., node 1360). In some aspects, an access terminal 1320 can be configured to connect to a preferred femto node (e.g., the home femto node of the access terminal 1320) whenever such connectivity is possible. For example, whenever the access terminal 1320 is within the user's residence 1330, it can communicate with the home femto node 1310.

In some aspects, if the access terminal 1320 operates within the mobile operator core network 1350 but is not residing on its most preferred network (*e.g.,* as defined in a preferred roaming list), the access terminal 1320 can continue to search for the most preferred network (*e.g.,* femto node 1310) using a Better System Reselection (BSR), which can involve a periodic scanning of available systems to determine whether better systems are currently available, and subsequent efforts to associate with such preferred systems. Using an acquisition table entry (*e.g.,* in a preferred roaming list), in one example, the access terminal 1320 can limit the search for specific band and channel. For example, the search for the most preferred system can be repeated periodically. Upon discovery of a preferred femto node, such as femto node 1310, the access terminal 1320 selects the femto node 1310 for camping within its coverage area.

A femto node can be restricted in some aspects. For example, a given femto node can only provide certain services to certain access terminals. In deployments with so-called restricted (or closed) association, a given access terminal can only be served by the macro cell mobile network and a defined set of femto nodes (*e.g.,* the femto nodes 1310 that reside within the corresponding user residence 1330). In some implementations, a femto node can be restricted to not provide, for at least one access terminal, at least one of: signaling, data access, registration, paging, or service.

In some aspects, a restricted femto node (which can also be referred to as a Closed Subscriber Group H(e)NB) is one that provides service to a restricted provisioned set of access terminals. This set can be temporarily or permanently extended as necessary. In some aspects, a Closed Subscriber Group (CSG) can be defined as the set of access nodes (*e.g.,* femto nodes) that share a common access control list of access terminals. A channel on which all femto nodes (or all restricted femto nodes) in a region operate can be referred to as a femto channel.

Various relationships can thus exist between a given femto node and a given access terminal. For example, from the perspective of an access terminal, an open femto node can refer to a femto node with no restricted association. A restricted femto node can refer to a femto node that is restricted in some manner (*e.g.,* restricted for association and/or registration). A home femto node can refer to a femto node on which the access terminal is authorized to access and operate on. A guest femto node can refer to a femto node on which an access terminal is temporarily authorized to access or operate on. An alien femto node can refer to a femto node on which the access terminal is not authorized to access or operate on, except for perhaps emergency situations (*e.g.,* 911 calls).

From a restricted femto node perspective, a home access terminal can refer to an access terminal that authorized to access the restricted femto node. A guest access terminal can refer to an access terminal with temporary access to the restricted femto node. An alien access terminal can refer to an access terminal that does not have permission to access the restricted femto node, except for perhaps emergency situations, for example, 911 calls (*e.g.,* an access terminal that does not have the credentials or permission to register with the restricted femto node).

For convenience, the disclosure herein describes various functionality in the context of a femto node. It should be appreciated, however, that a pico node can provide the same or similar functionality as a femto node, but for a larger coverage area. For example, a pico node can be restricted, a home pico node can be defined for a given access terminal, and so on.

A wireless multiple-access communication system can simultaneously support communication for multiple wireless access terminals. As mentioned above, each terminal can communicate with one or more base stations via transmissions on the forward and reverse links. The forward link (or downlink) refers to the communication link from the base stations to the terminals, and the reverse link (or uplink) refers to the communication link from the terminals to the base stations. This communication link can be established via a single-in-single-out system, a MIMO system, or some other type of system.

The various illustrative logics, logical blocks, modules, components, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal.

In one or more aspects, the functions, methods, or algorithms described may be implemented in hardware, software, firmware, or any combination thereof. If implemented in software, the functions may be stored or transmitted as one or more instructions or code on a computer-readable medium, which may be incorporated into a computer program product. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, substantially any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method performed at a home subscriber server (208; 322; 418) -HSS- or a home location register (208) -HLR- for provisioning local internet protocol -IP- access -LIPA-information for a device (102; 202; 302; 402) communicating in a visited public land mobile network -VPLMN, comprising:
receiving (502) an indication, from one of:
a mobility management entity (110; 206; 306; 408);
serving general packet radio service support node (110; 206);
mobile services switching center (110; 206); or
a visitor location register (110; 206); whereof each one is of the VPLMN, related to registering a device (102; 202; 302; 402) on the VPLMN, wherein the device connects to a Node B (104) -NB- or evolved Node B (104; 204; 304; 404) - eNB- of the VPLMN; and
sending (504) one or more parameters in response to the indication along with a LIPA indicator that specifies whether the device (102; 202; 302; 402) is allowed to utilize LIPA at the VPLMN.

2. The method of claim 1, wherein the receiving the indication comprises receiving an Update Location Request.

3. The method of claim 1, wherein the one or more parameters relate to subscription information of the device.

4. The method of claim 3, wherein the sending the one or more parameters is part of an Update Location Acknowledgement or an Insert Subscriber Data.

5. An apparatus (800) for use at a home subscriber server (208; 322; 418) -HSS- or a home location register (208) -HLR- for provisioning local internet protocol -IP- access -LIPA-information for a device (102; 202; 302; 402) communicating in a visited public land mobile network -VPLMN, comprising:
means (804) for receiving (502) an indication, from one of:
a mobility management entity (110; 206; 306; 408);
serving general packet radio service support node (110; 206);
mobile services switching center (110; 206); or
a visitor location register (110; 206); whereof each one is of the VPLMN, the indication being related to registering a device (102; 202; 302; 402) on the VPLMN, wherein the device connects to a Node B -NB- or eNodeB -eNB- of the VPLMN; and
means (806) for sending (504) one or more parameters in response to the indication along with a LIPA indicator that specifies whether the device (102; 202; 302; 402) is allowed to utilize LIPA at the VPLMN.

6. The apparatus of claim 5, wherein the indication comprises an Update Location Request.

7. The apparatus of claim 5, wherein the one or more parameters relate to subscription information of the device.

8. The apparatus of claim 7, wherein the means for sending are configured to send the one or more parameters as part of an Update Location Acknowledgement or an Insert Subscriber Data.

9. A computer program product for provisioning local internet protocol -IP- access - LIPA- information for a device communicating in a visited network, comprising a computer-readable medium embodying computer-readable instructions to carry out any one of the methods of claims 1 to 4.

10. A method for obtaining local internet protocol - IP - access - LIPA - information for a device (102; 202; 302; 402) connected to a Node B (104) - NB - or evolved Node B (104; 204; 304; 404) - eNB - and communicating in a visited public land mobile network - VPLMN, performed at one of:
a mobility management entity (110; 206; 306; 408);
serving general packet radio service support node (110; 206);
mobile services switching center (110; 206); or
a visitor location register (110; 206); whereof each one is of the VPLMN, the method comprising:
receiving (602) subscription information from a home subscriber server (208; 322; 418) -HSS- or a home location register (208) -HLR- for the device (102; 202; 302; 402) along with a LIPA indicator that specifies whether the device (102; 202; 302; 402) is allowed to utilize LIPA in the VPLMN; and
determining (604) whether to provide LIPA services to the device (102; 202; 302; 402) based at least in part on the LIPA indicator.

11. The method of claim 10, further comprising sending a request for the subscription information of the device.

12. The method of claim 11, wherein the sending the request comprises sending the request for the subscription information to a home subscriber server related to the device.

13. The method of claim 11, further comprising receiving a registration request from the device, wherein the sending the request for the subscription information is in response to the receiving the registration request.

14. The method of claim 13, wherein the receiving the registration request comprises receiving at least one of an attach request, registration request, tracking area update request, location area update request or routing area update request.

15. The method of claim 10, further comprising providing LIPA services to the device, wherein the LIPA indicator specifies that the device is allowed to utilize LIPA in the VPLMN.

16. The method of claim 15, further comprising receiving a request from the device for LIPA services.

17. The method of claim 16, wherein the providing LIPA services to the device comprises establishing an IP flow for LIPA at the NB or eNB to which the device communicates in response to the request.

18. An apparatus (900) for provisioning local internet - IP - access - LIPA - information for a device (102; 2020; 302; 402) communicating in a visited public land mobile network - VPLMN, Z for use at one of:
a mobility management entity (110; 206; 306; 408);
serving general packet radio service support node (110; 206);
mobile services switching center (110; 206); or
a visitor location register (110; 206);
whereof each one is of the VPLMN, the apparatus comprising:
means (904) for receiving (602) subscription information from a home subscriber server (208; 322; 418) -HSS- or a home location register (208) -HLR- for the device (102; 202; 302; 402) along with a LIPA indicator that specifies whether the device (102; 202; 302; 402) is allowed to utilize LIPA in the VPLMN; and
means (906) for determining (604) whether to provide LIPA services to the device (102; 202; 302; 402) based at least in part on the LIPA indicator.

19. A computer program product for obtaining local internet protocol -IP- access - LIPA- information for a device communicating in a visited network, comprising a computer-readable medium embodying computer-readable instructions to carry out any one of the methods of claims 10-17.

## Patentansprüche

1. Ein Verfahren, das an einem Heimteilnehmerserver bzw. HSS (HSS = home subscriber server) (208; 322; 418) oder einem Heimstandortregister bzw. HLR (HLR = home location register) (208) durchgeführt wird zum Vorsehen von Lokalinternetprotokollzugriffs- bzw. LIPA-Information (LIPA = local internet protocol access) für eine Einrichtung (102; 202; 302; 402), die in einem besuchten öffentlichen terrestrischen Mobilfunknetzwerk bzw. VPLMN (VPLMN = visited public land mobile network) kommuniziert, das Folgendes aufweist:
Empfangen (502) einer Anzeige von einem von Folgendem:
einer Mobilitätsmanagementeinheit (110; 206; 306; 408);
einem versorgenden GPRS-Unterstützungsknoten (GPRS = general packet radio service) (110; 206);
einer Mobildienstvermittlungsstelle (110; 206);oder
einem Besucherstandortregister (110; 206);
wobei jedes davon von dem VPLMN ist, und zwar in Beziehung stehend zum Registrieren einer Einrichtung (102; 202, 302; 402) bei dem VPLMN, wobei sich Einrichtung mit einem NodeB bzw. NB (104) oder einem evolved Node B bzw. eNB (104; 204; 304; 404) des VPLMN verbindet; und
Senden (504) eines oder mehrerer Parameter ansprechend auf die Anzeige zusammen mit einem LIPA-Indikator, der spezifiziert, ob es der Einrichtung (102; 202; 302; 402) gestattet ist, LIPA in dem VPLMN zu verwenden.

2. Verfahren nach Anspruch 1, wobei das Empfangen der Anzeige Empfangen einer Standortaktualisierunganfrage bzw. Update-Location-Request aufweist.

3. Verfahren nach Anspruch 1, wobei sich der eine oder die mehreren Parameter auf Teilnahme- bzw. Subskriptionsinformation der Einrichtung beziehen.

4. Verfahren nach Anspruch 3, wobei das Senden des einen oder der mehreren Parameter Teil einer Standortaktualisierungsbestätigung bzw. Update-Location-Acknowledgement oder einer Teilnehmerdateneinfügung bzw. Insert-Subscriber-Data ist.

5. Eine Vorrichtung (800) zur Verwendung an einem Heimteilnehmerserver bzw. HSS (HSS = home subscriber server) (208; 322; 418) oder einem Heimstandortregister bzw. HLR (HLR = home location register) (208) zum Vorsehen von Lokalinternetprotokollzugriffs- bzw. LIPA-Information (LIPA = local internet protocol access) für eine Einrichtung (102; 202; 302; 402), die in einem besuchten öffentlichen terrestrischen Mobilfunknetzwerk bzw. VPLMN (VPLMN = visited public land mobile network) kommuniziert, die Folgendes aufweist:
Mittel (804) zum Empfangen (502) einer Anzeige von einem von Folgendem:
einer Mobilitätsmanagementeinheit (110; 206; 306; 408);
einem versorgenden GPRS-Unterstützungsknoten (GPRS = general packet radio service) (110; 206);
einer Mobildienstvermittlungsstelle (110; 206);oder
einem Besucherstandortregister (110; 206);
wobei jedes davon von dem VPLMN ist, wobei die Anzeige in Beziehung steht mit einem Registrieren einer Einrichtung (102; 202, 302; 402) bei dem VPLMN,
wobei sich die Einrichtung mit einem NodeB bzw. NB (104) oder einem evolved Node B bzw. eNB (104; 204; 304; 404) des VPLMN verbindet; und Mittel (806) zum Senden (504) eines oder mehrerer Parameter ansprechend auf die Anzeige zusammen mit einem LIPA-Indikator, der spezifiziert, ob es der Einrichtung (102; 202; 302; 402) gestattet ist, LIPA in dem VPLMN zu verwenden.

6. Vorrichtung nach Anspruch 5, wobei die Anzeige eine Standortaktualisierungsanfrage bzw. Update-Location-Request aufweist.

7. Vorrichtung nach Anspruch 5, wobei sich der eine oder die mehreren Parameter auf Teilnahme- bzw. Subskriptionsinformation der Einrichtung beziehen.

8. Vorrichtung nach Anspruch 7, wobei die Mittel zum Senden des einen oder der mehreren Parameter konfiguriert sind zum Senden einer Standortaktualisierungsbestätigung bzw. Update-Location-Acknowledgement oder einer Teilnehmerdateneinfügung bzw. Insert-Subscriber-Data.

9. Ein Computerprogrammprodukt zum Vorsehen von Lokalinternetprotokollzugriffs- bzw. LIPA-Information (LIPA = local internet protocol access) für eine Einrichtung, die in einem besuchten Netzwerk kommuniziert, das ein computerlesbares Medium aufweist, das von einem Computer lesbare Instruktionen zum Ausführen eines der Verfahren der Ansprüche 1 bis 4 verkörpert.

10. Ein Verfahren zum Erlangen von Lokalinternetprotokollzugriffs- bzw. LIPA-Information (LIPA = local internet protocol access) für eine Einrichtung (102; 202; 302; 402), die mit einem Node B bzw. NB (104) oder einem evolved NodeB bzw. eNB (104; 204; 304; 404) verbunden ist und in einem besuchten öffentlichen terrestrischen Mobilfunknetzwerk bzw. VPLMN (VPLMN = visited public land mobile network) kommuniziert, das an einem von Folgendem durchgeführt wird:
einer Mobilitätsmanagementeinheit (110; 206; 306; 408);
einem versorgenden GPRS-Unterstützungsknoten (GPRS = general packet radio service) (110; 206);
einer Mobildienstvermittlungsstelle (110; 206);oder
einem Besucherstandortregister (110; 206);
wobei jedes davon von dem VPLMN ist, wobei das Verfahren Folgendes aufweist:
Empfangen (602) von Subskriptionsinformation von einem Heimteilnehmerserver bzw. HSS (HSS = home subscription server) (208; 322; 418) oder einem Heimstandortregister bzw. HLR (HLR = home location register) (208) für die Einrichtung (102; 202; 302; 402) zusammen mit einem LIPA-Indikator, der spezifiziert, ob es der Einrichtung (102; 202; 302; 402) gestattet ist, LIPA in dem VPLMN zu verwenden; und
Bestimmen (604), ob LIPA-Dienste an die Einrichtung (102; 202; 302; 402) vorgesehen werden sollen basierend wenigstens teilweise auf dem LIPA-Indikator.

11. Verfahren nach Anspruch 10, das weiter Senden einer Anfrage hinsichtlich der Subskriptionformation der Einrichtung aufweist.

12. Verfahren nach Anspruch 11, wobei das Senden der Anfrage Senden der Anfrage hinsichtlich der Subskriptionsinformation an einen HSS aufweist, der mit der Einrichtung in Beziehung steht.

13. Verfahren nach Anspruch 11, das weiter Empfangen einer Registrierungsanfrage von der Einrichtung aufweist, wobei das Senden der Anfrage hinsichtlich der Subskriptionsinformation ansprechend auf das Empfangen der Registrierungsanfrage stattfindet.

14. Verfahren nach Anspruch 13, wobei das Empfangen der Registrierungsanfrage Empfangen wenigstens einer Aufnahmeanfrage, Registrierungsanfrage, Nachverfolgungsbereichsaktualisierungsanfrage bzw. Tracking-Area-Update-Anfrage, Standortbereichsaktualisierungsanfrage oder Routingbereichsaktualisierungsanfrage aufweist.

15. Verfahren nach Anspruch 10, das weiter Vorsehen von LIPA-Diensten an die Einrichtung aufweist, wobei der LIPA-Indikator spezifiziert, dass der Einrichtung gestattet ist, LIPA in dem VPLMN zu verwenden.

16. Verfahren nach Anspruch 15, das weiter Empfangen einer Anfrage von der Einrichtung hinsichtlich LIPA-Diensten aufweist.

17. Verfahren nach Anspruch 16, wobei das Vorsehen von LIPA-Diensten an die Einrichtung Einrichten eines IP-Flusses für LIPA an dem NB oder eNB aufweist, mit dem die Einrichtung ansprechend auf die Anfrage kommuniziert.

18. Eine Vorrichtung (900) zum Vorsehen von Lokalinternetprotokollzugriffs- bzw. LIPA-Information (LIPA = local internet protocol access) für eine Einrichtung (102; 2020; 302; 402), die in einem besuchten öffentlichen terrestrischen Mobilfunknetzwerk bzw. VPLMN (VPLMN = visited public land mobile network) kommuniziert, und zwar zur Verwendung an einem von Folgendem:
einer Mobilitätsmanagementeinheit (110; 206; 306; 408);
einem versorgenden GPRS-Unterstützungsknoten (GPRS = general packet radio service) (110; 206);
einer Mobildienstvermittlungsstelle (110; 206);oder
einem Besucherstandortregister (110; 206);
wobei jedes davon von dem VPLMN ist, wobei die Vorrichtung Folgendes aufweist:
Mittel (904) zum Empfangen (602) von Subskriptionsinformation von einem Heimteilnehmerserver bzw. HSS (HSS = home subscription server) (208; 322; 418) oder einem Heimstandortregister bzw. HLR (HLR = home location register) (208) für die Einrichtung (102; 202; 302; 402) zusammen mit einem LIPA-Indikator, der spezifiziert, ob es der Einrichtung (102; 202; 302; 402) gestattet ist, LIPA in dem VPLMN zu verwenden; und
Mittel (906) zum Bestimmen (604), ob LIPA-Dienste an die Einrichtung (102; 202; 302; 402) vorgesehen werden sollen basierend wenigstens teilweise auf dem LIPA-Indikator.

19. Ein Computerprogrammprodukt zum Erlangen von Lokalinternetprotokollzugriffs- bzw. LIPA-Information (LIPA = local internet protocol access) für eine Einrichtung, die in einem besuchten Netzwerk kommuniziert, das ein computerlesbares Medium aufweist, das von einem Computer lesbare Instruktionen zum Ausführen eines der Verfahren der Ansprüche 10-17 aufweist.

## Revendications

1. Un procédé exécuté au niveau d'un serveur d'abonné domestique (208; 322; 418) -HSS- ou d'un registre de position de rattachement (208) -HLR-destiné à la mise à disposition d'informations d'accès de protocole internet -IP- local - LIPA- pour un dispositif (102; 202; 302; 402) communiquant dans un réseau mobile terrestre public visité -VPLMN, comprenant :
la réception (502) d'une indication, à partir d'un élément parmi :
une entité de gestion de la mobilité (110; 206; 306; 408),
un noeud de support de service radio en mode paquets général de desserte (110; 206),
un centre de commutation de services mobiles (110; 206), ou
un registre de position de visiteur (110; 206),
dont chacun est du VPLMN, relatif à l'enregistrement d'un dispositif (102; 202; 302; 402) sur le VPLMN, où le dispositif se connecte à un noeud B (104) -NB- ou un noeud B évolué (104; 204; 304; 404) -eNB- du VPLMN, et l'envoi (504) d'un ou de plusieurs paramètres en réponse à l'indication conjointement avec un indicateur LIPA qui spécifie si le dispositif (102; 202; 302; 402) est autorisé à utiliser un LIPA au niveau du VPLMN.

2. Le procédé selon la Revendication 1, où la réception de l'indication comprend la réception d'une demande d'actualisation de position.

3. Le procédé selon la Revendication 1, où les un ou plusieurs paramètres portent sur des informations d'abonnement du dispositif.

4. Le procédé selon la Revendication 3, où l'envoi des un ou plusieurs paramètres fait partie d'un accusé de réception d'actualisation de position ou de données d'insertion d'abonné.

5. Un appareil (800) destiné à une utilisation au niveau d'un serveur d'abonné domestique (208; 322; 418) -HSS- ou d'un registre de position de rattachement (208) -HLR- destiné à la mise à disposition d'informations d'accès de protocole internet -lP- local -LIPA- pour un dispositif (102; 202; 302; 402) communiquant dans un réseau mobile terrestre public visité -VPLMN, comprenant :
un moyen (804) de réception (502) d'une indication, à partir d'un élément parmi :
une entité de gestion de la mobilité (110; 206; 306; 408),
un noeud de support de service radio en mode paquets général de desserte (110; 206),
un centre de commutation de services mobiles (110; 206), ou
un registre de position de visiteur (110; 206),
dont chacun est du VPLMN, l'indication étant relative à l'enregistrement d'un dispositif (102; 202; 302; 402) sur le VPLMN, où le dispositif se connecte à un noeud B -NB- ou un noeud B évolué -eNB- du VPLMN, et
un moyen (806) d'envoi (504) d'un ou de plusieurs paramètres en réponse à l'indication conjointement avec un indicateur LIPA qui spécifie si le dispositif (102; 202; 302; 402) est autorisé à utiliser un LIPA au niveau du VPLMN.

6. L'appareil selon la Revendication 5, où l'indication comprend une demande d'actualisation de position.

7. L'appareil selon la Revendication 5, où les un ou plusieurs paramètres portent sur des informations d'abonnement du dispositif.

8. L'appareil selon la Revendication 7, où le moyen d'envoi est configuré de façon à envoyer les un ou plusieurs paramètres sous la forme d'une partie d'un accusé de réception d'actualisation de position ou de données d'insertion d'abonné.

9. Un produit de programme informatique destiné à la mise à disposition d'informations d'accès de protocole internet -IP- local -LIPA- pour un dispositif communiquant dans un réseau visité, comprenant un support lisible par ordinateur incorporant des instructions lisibles par ordinateur destinées à l'exécution de l'un quelconque des procédés selon les Revendications 1 à 4.

10. Un procédé d'obtention d'informations d'accès de protocole internet -IP- local -LIPA- pour un dispositif (102; 202; 302; 402) raccordé à un noeud B (104) -NB- ou un noeud B évolué (104; 204; 304; 404) -eNB- et communiquant dans un réseau mobile terrestre public visité -VPLMN, exécuté au niveau d'un élément parmi :
une entité de gestion de la mobilité (110; 206; 306; 408),
un noeud de support de service radio en mode paquets général de desserte (110; 206),
un centre de commutation de services mobiles (110; 206), ou
un registre de position de visiteur (110; 206),
dont chacun est du VPLMN, le procédé comprenant :
la réception (602) d'informations d'abonnement à partir d'un serveur d'abonné domestique (208; 322; 418) -HSS- ou d'un registre de position de rattachement (208) -HLR- pour le dispositif (102; 202; 302; 402) conjointement avec un indicateur LIPA qui spécifie si le dispositif (102; 202; 302; 402) est autorisé à utiliser un LIPA dans le VPLMN, et
la détermination (604) s'il convient de fournir des services LIPA au dispositif (102; 202; 302; 402) en fonction au moins en partie de l'indicateur LIPA.

11. Le procédé selon la Revendication 10, comprenant en outre l'envoi d'une demande relative aux informations d'abonnement du dispositif.

12. Le procédé selon la Revendication 11, où l'envoi de la demande comprend l'envoi de la demande relative aux informations d'abonnement à un serveur d'abonné domestique relié au dispositif.

13. Le procédé selon la Revendication 11, comprenant en outre la réception d'une demande d'enregistrement à partir du dispositif, où l'envoi de la demande relative aux informations d'abonnement est en réponse à la réception de la demande d'enregistrement.

14. Le procédé selon la Revendication 13, où la réception de la demande d'enregistrement comprend la réception d'au moins une demande parmi une demande de rattachement, une demande d'enregistrement, une demande d'actualisation de zone de suivi, une demande d'actualisation de zone de position ou une demande d'actualisation de zone d'acheminement.

15. Le procédé selon la Revendication 10, comprenant en outre la fourniture de services LIPA au dispositif, où l'indicateur LIPA spécifie que le dispositif est autorisé à utiliser un LIPA dans le VPLMN.

16. Le procédé selon la Revendication 15, comprenant en outre la réception d'une demande à partir du dispositif pour des services LIPA.

17. Le procédé selon la Revendication 16, où la fourniture de services LIPA au dispositif comprend l'établissement d'un flux IP pour un LIPA au niveau du NB ou de l'eNB avec lequel le dispositif communique en réponse à la demande.

18. Un appareil (900) destiné à la mise à disposition d'informations d'accès de protocole internet - IP - local - LIPA - pour un dispositif (102; 2020; 302; 402) communiquant dans un réseau mobile terrestre public visité -VPLMN, destiné à une utilisation au niveau d'un élément parmi :
une entité de gestion de la mobilité (110; 206; 306; 408),
un noeud de support de service radio en mode paquets général de desserte (110; 206),
un centre de commutation de services mobiles (110; 206), ou
un registre de position de visiteur (110; 206),
dont chacun est du VPLMN, l'appareil comprenant :
un moyen (904) de réception (602) d'informations d'abonnement à partir d'un serveur d'abonné domestique (208; 322; 418) -HSS- ou d'un registre de position de rattachement (208) -HLR- pour le dispositif (102; 202; 302; 402) conjointement avec un indicateur LIPA qui spécifie si le dispositif (102; 202; 302; 402) est autorisé à utiliser un LIPA dans le VPLMN, et
un moyen (906) de détermination (604) s'il convient de fournir des services LIPA au dispositif (102; 202; 302; 402) en fonction au moins en partie de l'indicateur LIPA.

19. Un produit de programme informatique destiné à l'obtention d'informations d'accès de protocole internet -IP- local -LIPA- pour un dispositif communiquant dans un réseau visité, comprenant un support lisible par ordinateur incorporant des instructions lisibles par ordinateur destinées à l'exécution de l'un quelconque des procédés selon les Revendications 10 à 17.
